**Europäisches Patentamt**

**European Patent Office**

**Office européen des brevets**

(19)

(11) Veröffentlichungsnummer : **0 355 415 B1**

(12) **EUROPÄISCHE PATENTSCHRIFT**

(45) Veröffentlichungstag der Patentschrift :
**14.09.94 Patentblatt 94/37**

(51) Int. Cl.$^5$ : **H02M 3/335**

(21) Anmeldenummer : **89113411.6**

(22) Anmeldetag : **21.07.89**

(54) **Schaltregler.**

(30) Priorität : **26.08.88 DE 3828959**

(43) Veröffentlichungstag der Anmeldung :
**28.02.90 Patentblatt 90/09**

(45) Bekanntmachung des Hinweises auf die
Patenterteilung :
**14.09.94 Patentblatt 94/37**

(84) Benannte Vertragsstaaten :
**DE FR GB IT NL**

(56) Entgegenhaltungen :
**EP-A- 0 189 680**

(73) Patentinhaber : **ANT Nachrichtentechnik
GmbH
Gerberstrasse 33
D-71522 Backnang (DE)**

(72) Erfinder : **Reustle, Hans, Dipl.-Ing.(FH)
Brahmstrasse 8
D-7152 Aspach (DE)**

EP 0 355 415 B1

**Beschreibung**

Die Erfindung geht aus von einem Schaltregler gemäß dem Oberbegriff des Patentanspruchs 1. Ein solcher Schaltregler ist bekannt aus EP 189 680 A3.

Beim Schaltregler gemäß EP 189 680 A3 werden die Ausgangsspannungen zweier Ausgangskreise geregelt. Ein Ausgang liefert eine Gleichspannung, die über eine Variation Einschaltdauer des Pulsbreitenmodulators stabilisiert wird. Der andere Ausgang liefert eine Wechselspannung, die über die Erfassung des Stromes in diesem Ausgangskreis, der einen Serienresonanzkreis enthält, und einer entsprechenden Variation der Frequenz des Oszillators für den Schaltregler, stabilisiert wird.

Bei einem Schaltregler gemäß EP 48 934 B1 werden die Ausgangsspannungen zweier Ausgangskreise geregelt. Dazu werden Spannungen, die proportional zu den Ausgangsspannungen der Ausgangskreise sind, summiert und einem Pulsbreitenmodulator, der die Einschaltzeiten des Schaltregler-Stellgliedes bestimmt, zugeführt. Der Pulsbreitenmodulator ist von einem Taktoszillator steuerbar. Die Ausgangskreise sind durch diese Art der Regelung stark miteinander verkoppelt.

Aufgabe der Erfindung ist es, den Schaltregler ausgehend vom Oberbegriff des Patentanspruchs 1 derart auszubilden, daß eine unabhängige Regelung, insbesondere der Ausgangsspannungen, mehrerer Ausgangskreise voneinander möglich ist.
Diese Aufgabe wird durch die Merkmale des Patentanspruchs 1 gelöst.

Die Unteransprüche zeigen vorteilhafte Ausgestaltungen auf. Es ist zwar an sich bekannt, Ausgangskreise von Schaltreglern mit Schwingkreiselementen zu beschalten (EP 123 147 A2, High Frequency Power Conversion, Conference Proceedings, Mai 1986, Seiten 241-250), jedoch ergeben sich hieraus keine Anregungen zur Verwendung der Signalamplitude eines damit gebildeten Schwingkreises zur Ausgangsspannungsregelung.

Ein nach der Erfindung konzipierter Schaltregler besitzt folgende Vorteile:
- Mehrere Ausgangskreise sind getrennt voneinander regelbar.
- Aus einer Zwischenspannung können verschieden polarisierte Ausgangsspannungen gewonnen werden.
- Die Leistungsbeanspruchung der Gleichrichter in den Ausgangskreisen mit Schwingkreis ist vermindert.
- Das Prinzip der Erfindung ist universell einsetzbar, d.h. auf die verschiedensten Schaltregler-Typen (Sperrwandler, Flußwandler ...) anwendbar.

Anhand der Zeichnungen werden Ausführungsbeispiele der Erfindung näher erläutert. Es zeigen
Fig. 1 ein Prinzipschaltbild eines Sperrwandlers mit Pulsbreiten- und Pulsfrequenzregelung des Stellgliedes,
Fig. 2 den Aufbau eines Fehlersignalverstärkers,
Fig. 3 den Aufbau eines spannungsgesteuerten Oszillators,
Fig. 4 Signalverläufe für den Sperrwandler gemäß Fig. 1,
Fig. 5 ein Prinzipschaltbild eines Sperrwandlers mit Pulsbreitenregelung über einen Ausgangskreis und Regelung der Schwingkreisamplitude in einem anderen Ausgangskreis,
Fig. 6 Signalverläufe für den Sperrwandler gemäß Fig. 5,
Fig. 7 eine Schaltungsrealisierung zur Variation der Schwingkreis-Signalamplitude.

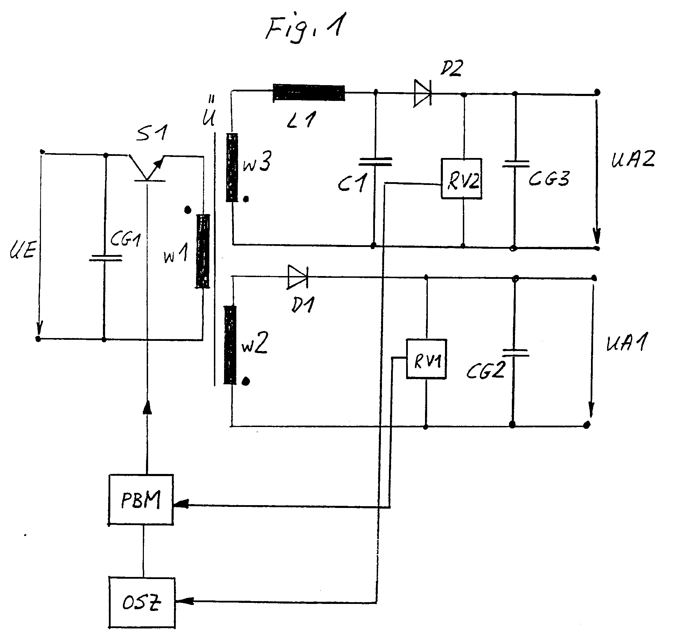

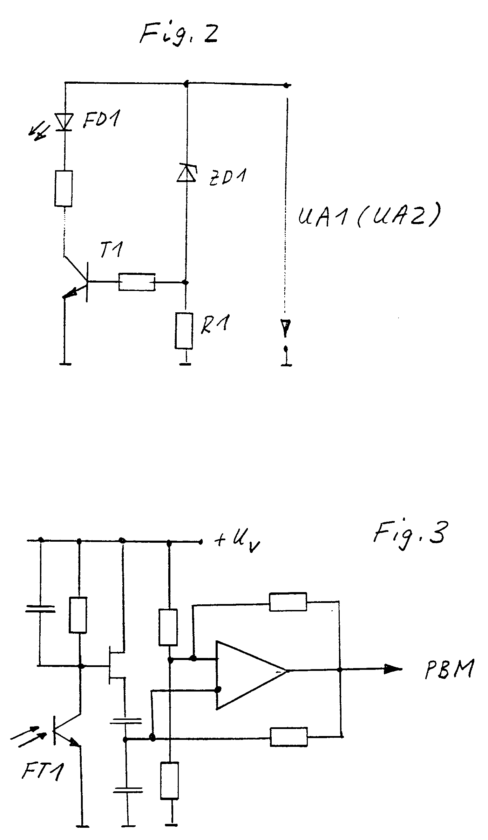

In Fig. 1 ist ein Schaltregler in Sperrwandlerausführung mit zwei Ausgangskreisen dargestellt. Die Eingangsspannung UE des Schaltreglers liegt über einem Glättungskondensator CG1 im Eingangskreis. Parallel zu diesem Glättungskondensator CG1 liegt die Serienschaltung, bestehend aus Stellglied - Schalttransistor S1 - des Schaltreglers und Primärwicklung w1 des Leistungsübertragers Ü. Der erste Ausgangskreis des Schaltreglers besteht aus der Sekundärwicklung w2 des Leistungsübertragers Ü, dem Gleichrichter D1 und dem Glättungskondensator CG2, an dem die Ausgangsspannung UA1 abgreifbar ist. Der Schalttransistor S1 wird über den Pulsbreitenmodulator PBM bezüglich seines Tastverhältnisses in Abhängigkeit der Höhe der Ausgangsspannung UA1 gesteuert, und zwar so, daß bei zunehmender Ausgangsspannung UA1 die Einschaltzeit des Schalttransistors S1 abnimmt. Als Auswertemittel für die Ausgangsspannung UA1 ist ein Fehlersignalverstärker RV1, dessen Ausbildung in Fig. 2 dargestellt ist, vorgesehen. Je nach Höhe der Ausgangsspannung UA1 ändert sich der Spannungsabfall am Widerstand R1, der wiederum über den Transistor T1 den Strom durch die Photodiode FD1 bestimmt. Dem Pulsbreitenmodulator PBM ist ein Phototransistor zugeordnet, der ein Steuersignal für den Pulsbreitenmodulator PBM erzeugt, welches proportional zur Höhe des Stromes durch die Photodiode FD1 ist. Die Schaltfrequenz ist durch einen Oszillator OSZ bestimmt, der wiederum den Pulsbreitenmodulator PBM steuert. Der zweite Ausgangskreis des Schaltreglers besteht aus der Sekundärwicklung w3 des Leistungsübertragers Ü, dem Gleichrichter D2 und dem Glättungskondensator CG3, an dem die Ausgangsspannung UA2 abgreifbar ist. Der zweite Ausgangskreis weist einen Schwingkreis mit der Induktivität L1 und der Kapazität C1 auf. Die Induktivität L1 ist zwischen der Sekundärwicklung w3 und dem Gleichrichter D2 angeordnet. Die Kapazität C1 liegt zwischen dem Verbindungspunkt Sekundärwicklung w3 - Gleichrichter D2 und dem vom Gleichrichter D2 entfernten Wicklungsende der Sekundärwicklung w3. Die Signalamplitude des Schwingkreises, hier die Spannung an der Kapazität C1, wird nach Gleichrichtung mittels Gleichrichter D2 über Auswertemittel RV2 erfaßt. Sie stellt auch die Ausgangsspannung UA2 des zweiten Ausgangskreises dar. Über diese Auswertemittel RV2 wird die Frequenz des Oszillators OSZ, der als spannungsgesteuerter Oszillator ausgebildet ist, verändert. Die Auswertemittel RV2 bestehen hier ebenfalls aus einem Fehlersignalverstärker (Fig. 2) für die Ausgangsspannung UA2. Bei hoher Ausgangsspannung UA2 erhält der Phototransistor FT1 des in Fig. 3 dargestellten spannungsgesteuerten RC-Oszillators über die Photodiode FD1 des Fehlersignalverstärkers RV2 ein Steuersignal zur Erhöhung der Oszillatorfrequenz. Bei kleiner Ausgangsspannung UA2 erniedrigt sich die Oszillatorfrequenz. Durch diese Frequenzregelung wird die Ausgangsspannung UA2 des zweiten Ausgangskreises unabhängig von der Belastung konstant gehalten. Durch die Pulsbreitenregelung wird dagegen die Ausgangsspannung UA1 des ersten Ausgangskreises konstant gehalten.

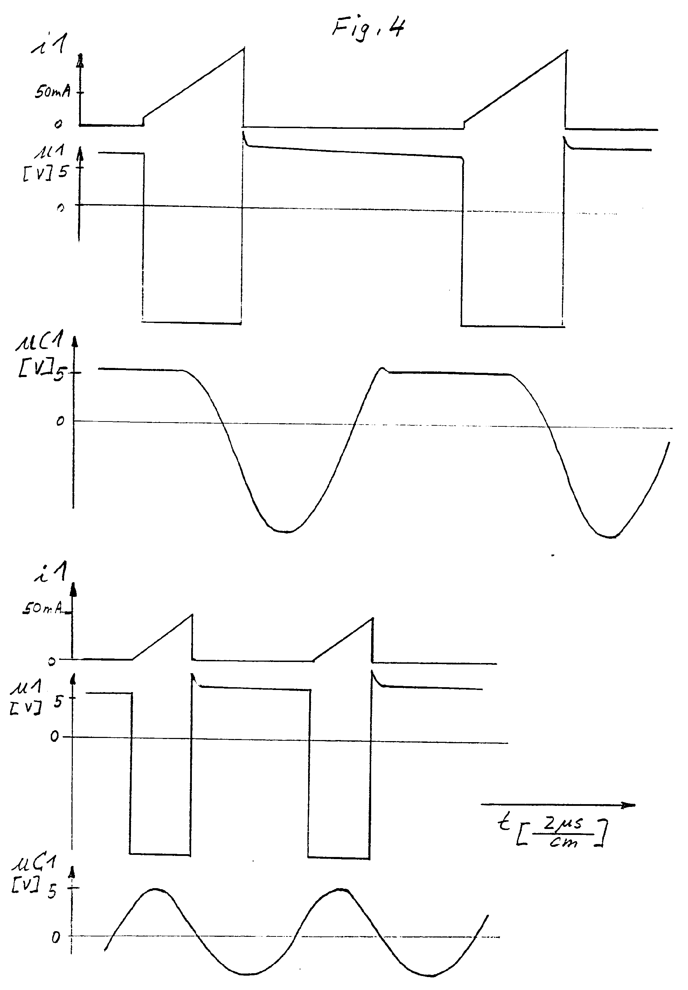

In Fig. 4 sind die Signalverläufe ausgewählter Signale für den Sperrwandler gemäß Fig. 1 dargestellt. Die ersten beiden Zeitdiagramme zeigen den Strom i1 durch das Schaltregler-Schaltglied S1 und die Spannung u1 am Schaltregler-Stellglied bei Nennbelastung bezogen auf die Wicklungsspannungen des Übertragers Ü. In diesem Fall ist die Schaltfrequenz des Schaltreglers niedriger.

Die übrigen Zeitdiagramme zeigen ebenfalls den Verlauf des Stromes i1, der Spannung u1 und Spannung uc1 nun aber für den Fall eines Leerlaufs. Der Verlauf der Spannung uc1 ist sinusförmig. Hier ist die Schaltfrequenz jedoch hoch. Es wird keine Energie auf den Ausgang abgegeben.

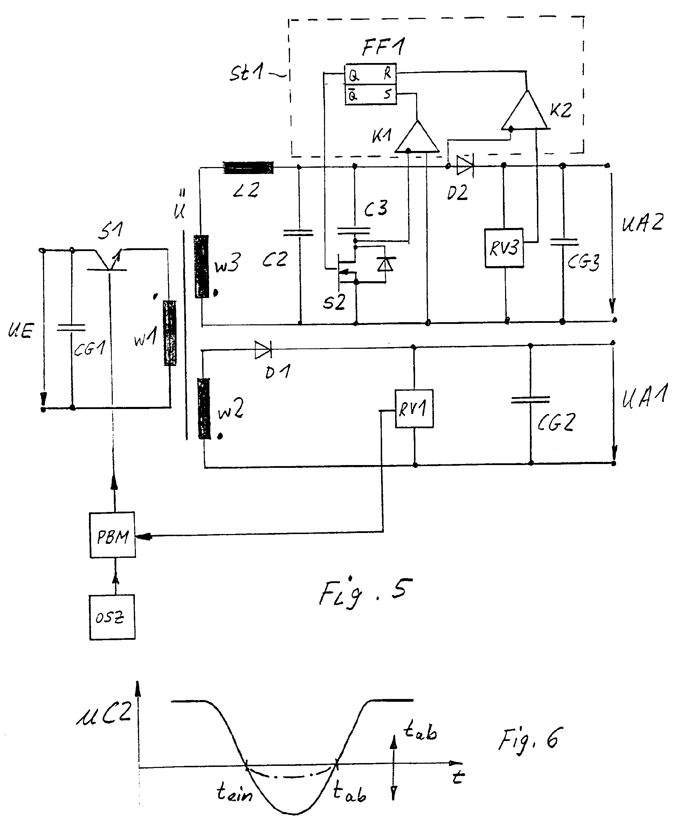

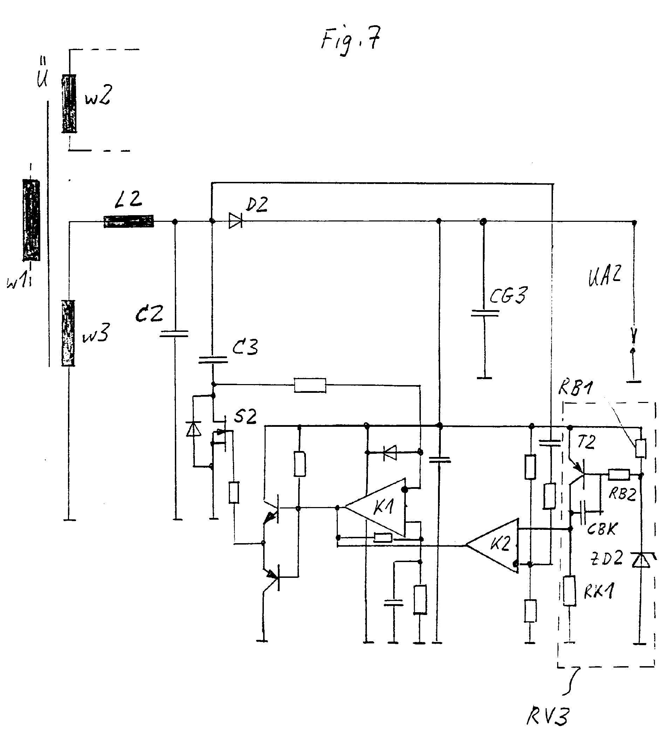

Beim Ausführungsbeispiel gemäß Fig. 5 erfolgt wie zuvor eine Pulsbreitenregelung über den ersten Ausgangskreis mittels den Schaltmitteln RV1. In Abweichung zum vorherigen Ausführungsbeispiel wird nun aber nicht die Frequenz des Oszillators OSZ verändert, sondern konstant gehalten. Dagegen wird die Resonanzfrequenz des Schwingkreises im zweiten oder einem weiteren Ausgangskreis in Abhängigkeit der Schwingkreisamplitude verändert. Hierzu ist dem Schwingkreis, der wie beim Ausführungsbeispiel gemäß Fig. 1 angeordnet ist und aus einer Induktivität L2 und einer Kapazität C2 besteht, über einen Halbleiterschalter S2 ein Kondensator C3 zuschaltbar. Dieser Kondensator C3 sowie der Halbleiterschalter S2 sind so angeordnet, daß bei eingeschaltetem Halbleiterschalter S2, hier als n-Kanal FET ausgebildet, der Kondensator C3 parallel zur Kapazität C2 liegt. Das Tastverhältnis des Halbleiterschalters S2 wird durch den Fehlersignalverstärker RV3, der ähnlich wie die Fehlersignalverstärker RV1 und RV2 (Fig. 2) aufgebaut sein kann, und die beiden Komparatoren K1 und K2 sowie das RS-Flip-Flop FF1 als Bestandteil einer Steuerschaltung St1 bestimmt. Der Komparator K1 bestimmt den Einschaltzeitpunkt des Halbleiterschalters S2. Als Schaltkriterium wird ihm die Spannung uS2 über dem Halbleiterschalter S2 zugeführt. Der Ausgang des Komparators K1 ist mit dem Setzeingang S des Flip-Flops FF1 verbunden. Für die folgende Beschreibung ist vorausgesetzt, daß die Kapazität des Kondensators C3 sehr viel größer ist als diejenige von C2. Der Komparator K1 schaltet den Halbleiterschalter S2 ein, wenn die Spannung uS2 - Drain-Source Spannung des FET - negativ zu werden beginnt. Der FET wird also bei der Nullspannung, d.h. relativ verlustlos, eingeschaltet. Das Abschalten des Halbleiterschalters S2 wird vom Komparator K2 bestimmt. Als Abschaltkriterien werden ihm über den Fehlersignalverstärker RV3, in Fig. 7 gestrichelt umrandet, das Ausgangsspannungsfehlersignal am nichtinvertierenden Eingang und die Signalamplitude des Schwingkreises - Spannung uC2 - am invertierenden Eingang zugeführt. Der Abschaltzeitpunkt ist gegeben, wenn die Spannung am invertierenden Eingang des Komparators K2 positiver wird als am nichtinvertierenden Eingang.

Fig. 6 zeigt die Spannung an der Kapazität C2. Über den Abschaltzeitpunkt $t_{ab}$ wird die Spannung uC2 und damit auch die Ausgangsspannung UA2 verändert. Bei Zuschalten des Kondensators C3 wird die ursprüngliche Sinuskurve (durchgezogene Linie) des Schwingkreises stark abgeflacht (strichpunktierte Linie). Wenn der Kondensator C3 über den Halbleiterschalter S2 dauernd zugeschaltet ist, stellt sich die kleinste Signalamplitude am Schwingkreis ein. Ist der Kondensator C3 dauernd abgetrennt, tritt die größte Signalamplitude auf.

Im Ausführungsbeispiel gemäß Fig. 7 ist der Komparator K1 mit Hystereseverhalten geschaltet. Der Komparator K1 hält sich so selbstleitend, bis über den Ausgang vom Komparator K2 Nullpotential erscheint. Durch diese Schaltungsrealisierung kann auf das in Fig. 5 dargestellte Flip-Flop FF1 verzichtet werden.

Bei der Realisierung gemäß Fig. 7 besteht der Fehlersignalverstärker RV3 für die Ausgangsspannung UA2 aus einer Transistorstufe T2. Der Emitter dieser Transistorstufe ist auf das Potential der Ausgangsspannung UA2 gelegt. Der Kollektor ist mit einem Kollektorwiderstand RK1 beschaltet, an dem das Fehlersignal für nichtinvertierenden Eingang des Komparators K2 abfällt. Die Basis ist mit einem Spannungsteiler, bestehend aus den Widerständen RB1, RB2 und einer Zenerdiode ZD2 beschaltet. Basis und Kollektor von T2 sind durch einen Kondensator CBK überbrückt. Ein Optokoppler wie beim Ausführungsbeispiel gemäß Fig. 1 ist hier nicht nötig, da kein Steuersignal in den Eingangskreis galvanisch getrennt übertragen werden muß.

Die Dimensionierung des Schwingkreises wird vorteilhafterweise folgendermaßen vorgenommen:

$$L1 \text{ bzw. } L2 = 100 \, \mu H$$
$$C1 \text{ bzw. } C2 = 47 \, nF$$
$$C3 = 1 \, \mu F$$

Anstelle der bisher gezeigten Sperrwandler-Ausführung ist auch eine Flußwandler-Ausführung möglich. Bezüglich des Ausgangskreises mit Schwingkreis ist der Wicklungssinn der Sekundärwicklung w3 zu ändern. Auch Realisierungen von Schaltreglern ohne galvanische Trennung sind einfach aufzubauen. Anstelle der Änderung der Resonanzfrequenz des Schwingkreises über einen zuschaltbaren Kondensator kann selbstverständlich auch eine Induktivität zugeschaltet werden oder eine Kombination aus Kondensator und Induktivität. Der Schwingkreis kann auch anders aufgebaut sein. Auch kann mehr als ein Ausgangskreis mit einem Schwingkreis zur Regelung ausgestattet sein.

Bei allen vorgestellten Ausführungsbeispielen kann die Induktivität des Schwingkreises/der Schwingkreise im Leistungsübertrager Ü integriert sein, z.B. durch lose Kopplung der Sekundärwicklung/en mit den restlichen Wicklungen.

**Patentansprüche**

1. Schaltregler mit mindestens zwei Ausgangskreisen wobei des Stellglied (S1) des Schaltreglers in Serie zur Primärwicklung (W1) eines Übertragers (Ü) angeordnet ist, wobei dem ersten Ausgangskreis Mittel zur Erfassung der Ausgangsspannung zugeordnet sind und diese Mittel (RV1) mit einem Pulsbreitenmodulator (PBM) zur Steuerung des Tastverhältnisses des Schaltregler-Stellgliedes (S1) verbunden sind, und wobei der Pulsbreitenmodulator (PBM) von einem Oszillator (OSZ) gesteuert ist, wobei im zweiten oder weiteren Ausgangskreis/en ein Schwingkreis (L2, C2) vorgesehen ist, wobei der Schwingkreis (L2, C2) mit Auswertemitteln (RV3) beschaltet ist dadurch gekennzeichnet, daß diese Auswertemittel (RV3) mit Mitteln zur Variation der Resonanzfrequenz des Schwingkreises (L2, C2) in Abhängigkeit des zu regelnden Ausgangssignals (UA2) verbunden sind.

2. Schaltregler nach Anspruch 1, dadurch gekennzeichnet, daß zur Variation der Resonanzfrequenz der/des Schwingkreise/s (L2, C2) ein Kondensator (C3) vorgesehen ist, der über einen Halbleiterschalter (S2) dem frequenzbestimmenden Kondensator (C2) des Schwingkreises derart zuschaltbar ist, daß die Signalamplitude des Schwingkreises (L2, C2) variierbar ist.

3. Schaltregler nach Anspruch 1 oder 2, dadurch gekennzeichnet, daß die Auswertemittel (RV1, RV2, RV3) Fehlersignalverstärker für die Ausgangsspannung des jeweiligen Ausgangskreises sind.

4. Schaltregler nach Anspruch 2, dadurch gekennzeichnet, daß der Halbleiterschalter (S2) über eine Steuerschaltung (St1) aktivierbar ist, wobei dieser Steuerschaltung als Schaltkriterien zum Abschalten die Ausgangsspannung (UA1 ... UAx) des jeweiligen Ausgangskreises und die Signalamplitude des Schwingkreises und als Schaltkriterium zum Einschalten die am Halbleiterschalter (S2) auftretende Spannung zwischen den Hauptelektroden zuführbar ist.

5. Schaltregler nach Anspruch 4, dadurch gekennzeichnet, daß das Einschaltkriterium die Nullspannung zwischen den Hauptelektroden des Halbleiterschalters (S2) ist.

**Claims**

1. Switching regulator with at least two output circuits, wherein the setting member (S1) of the switching regulator is arranged in series with the primary winding (w1) of a transformer (Ü), wherein means for the detection of the output voltage are associated with the first output circuit and these means (RV1) are connected with a pulse width modulator (PBM) for the control of the keying ratio of the switching regulator setting member (S1), wherein the pulse width modulator (PBM) is controlled by an oscillator (OSZ), wherein an oscillatory circuit (L2, C2) is provided in the second output circuit or in further output circuits and wherein the oscillatory circuit (L2, C2) is connected with evaluating means (RV3), characterised thereby, that these evaluating means (RV3) are connected with means for variation of the resonant frequency of the oscillatory circuit (L2, C2) in dependence on the output signal (UA2) to be regulated.

2. Switching regulator according to claim 1, characterised thereby, that a capacitor (C3) is provided for the variation of the resonant frequency of the oscillatory circuit or circuits (L2, C2) and switchable by way of a semiconductor switch (S2) to the frequency-determining capacitor (C2) of the oscillatory circuit in such a manner that the signal amplitude of the oscillatory circuit (L2, C2) is variable.

3. Switching regulator according to claim 1 or 2, characterised thereby, that the evaluating means (RV1, RV2, RV3) are error signal amplifiers for the output voltage of the respective output circuit.

4. Switching regulator according to claim 2, characterised thereby, that the semiconductor switch (S2) is activatable by way of a control circuit (St1), wherein the output voltage (UA1 to UAx) of the respective output circuit and the signal amplitude of the oscillatory circuit are feedable to this control circuit as switching criteria for the switching-off and the voltage arising between the main electrodes at the semiconductor switch (S2) is feedable to this control circuit as switching criterion for the switching-on.

5. Switching regulator according to claim 4, characterised thereby, that the criterion for the switching-on is the zero voltage between the main electrodes of the semiconductor switch (S2).


**Revendications**

1. Régulateur à découpage possédant au moins deux circuits de sortie et dans lequel l'organe de réglage (S1) du régulateur à découpage est disposé en série avec l'enroulement primaire (wl) d'un transformateur (Ü), des moyens pour détecter la tension de sortie étant coordonnés au premier circuit de sortie et ces moyens (RV1) étant reliés à un modulateur de largeur d'impulsion (PBM) pour commander le rapport cyclique de l'organe de réglage (S1) du régulateur à découpage, le modulateur de largeur d'impulsion (PBM) étant commandé par un oscillateur (OSZ) et un circuit oscillant (L2, C2) étant prévu dans le deuxième circuit de sortie ou dans un ou plusieurs circuits de sortie supplémentaires, circuit oscillant (L2, C2) dans lequel sont montés des moyens d'exploitation (RV3), caractérisé en ce que ces moyens d'exploitation (RV3) sont reliés à des moyens pour varier la fréquence de résonance du circuit oscillant (L2, C2) en fonction du signal de sortie (UA2) à régler.

2. Régulateur à découpage selon la revendication 1, caractérisé en ce que, pour la variation de la fréquence de résonance des circuits oscillants ou du circuit oscillant (L2, C2), on a prévu un condensateur (C3) qui, à travers un commutateur à semi-conducteur (S2), peut être ajouté dans le montage au condensateur (C2) déterminant la fréquence du circuit oscillant, de manière que l'amplitude du signal du circuit oscillant (L2, C2) puisse être variée.

3. Régulateur à découpage selon la revendication 1 ou 2, caractérisé en ce que les moyens d'exploitation (RV1, RV2, RV3) sont des amplificateurs de signal d'erreur pour la tension de sortie du circuit de sortie concerné.

4. Régulateur à découpage selon la revendication 2, caractérisé en ce que le commutateur à semi-conducteur (S2) est activable à travers un circuit de commande (St1) auquel peuvent être appliquées, en tant que critères pour la coupure, la tension de sortie (UA1 ... UAx) du circuit de sortie concerné et l'amplitude du signal du circuit oscillant et auquel peut être appliquée, en tant que critère pour l'enclenchement, la tension apparaissant sur le commutateur à semi-conducteur (S2) entre les électrodes principales.

5. Régulateur à découpage selon la revendication 4, caractérisé en ce que le critère d'enclenchement est la tension nulle entre les électrodes principales du commutateur à semi-conducteur (S2).

Fig. 1

Fig. 2

Fig. 3

UA1(UA2)

+ U_V

PBM

FT1

Fig. 4

Fig. 5

Fig. 6

Fig. 7